# EUROPEAN PATENT SPECIFICATION

(11) **EP 2 723 947 B1**
(45) Date of publication and mention of the grant of the patent: **30.12.2020**
(21) Application number: 12730701.5
(22) Date of filing: 22.06.2012
(51) Int. Cl.: E02D 13/00, E02D 13/04

(54) **CENTRE SYSTEM**
ZENTRIERSYSTEM
SYSTÈME DE CENTRAGE

(30) Priority: 22.06.2011 NL 2006982
(43) Date of publication of application: 30.04.2014
(73) Proprietor: IHC Holland IE B.V., 3361 EP Sliedrecht (NL)
(72) Inventor: JUNG, Boudewijn Casper, NL-4614 AK Bergen op Zoom (NL); HESSELS, Johannes Louis Leonardus, NL-5731 JM Mierlo (NL)
(74) Representative: Nederlandsch Octrooibureau
(86) International application number: PCT/NL2012/050438
(87) International publication number: WO 2012/177131

(56) References cited:
- WO-A2-2010/151121
- DE-U1-202009 006 507
- JP-A- 8 049 235
- JP-A- H11 256 576
- JP-A- 2011 012 394
- US-A- 3 502 159
- US-A- 4 102 147
- US-A1- 2005 083 783

## Description

### Background

The present invention relates to an assembly of a first and second elongate tubular element, such as an underwater pile accommodated within a noise mitigation screen, and a centre system suitable for centring the first elongate tubular element and the second elongate tubular element, and wherein the assembly has a common central longitudinal axis along which axis both the first and second tubular element extend.

The present invention specifically relates to an assembly having a centre system for centring and/or maintaining centred, a tubular element having a tapered section, or sections of different diameter like a telescopic pile, in particular during hammering of the tubular element having a tapered section.

The invention further relates to a method for centring a first elongate tubular element and a second elongate tubular element, such as an underwater pile accommodated within a noise mitigation screen, at a common central longitudinal axis along which axis both the first and second element extend
US 2005/0083783 A1 discloses an underwater energy dampening device which device includes a plurality of vertically spaced bubble producing units. With bubbles produced al various depths, the present invention can effectively attenuate sound and other energy from underwater construction projects in high current or deep water areas.

US4,102,147 relates to a submersible positioning and guiding apparatus for pile driving. Use of hydraulic cylinders is shown for positioning a pile within a frame. However under circumstances the positioning of the pile in the frame is insufficient leaving e.g. parallel and angular misalignment. In addition, control of the hydraulic cylinders is cumbersome.

WO 2010/151121 A2 discloses an underwater pile inside a noise dampening screen, the pile being maintained relatively centered by spacers.

JP 2011 012394 A discloses a system for guiding a tapered pile.

### Summary of the invention

The invention aims to provide a assembly wherein at least one of the problems of known centre system is at least partly solved.

Yet another object of the invention is to provide an assembly with an alternative centre system. According to a first aspect of the invention this is realized with an assembly according to claim 1.

This assembly provides the possibility of maintaining a pile with a tapered section in its centred position relative to an outer tubular element such that an intermediate space between the pile and the outer tubular element is optimal with respect to noise dampening. The at least two drive means being mutually coupled for evenly driving said one of the first and second tubular elements for maintaining said one of the first and second tubular elements in its centred position ensures that optimal noise dampening is maintained independent of external loads, like flow or swell, to the first and second tubular elements.

The centre system of the assembly is also useful when using one of the first elongate tubular element and second elongate tubular element as a template for the other. Thus, said one tubular element provides a reference for the other tubular element.

In this connection a centred position may be interpreted broadly such that it means e.g. that both an underwater pile and a noise mitigation screen are centred at a common central longitudinal axis such that noise transmission from the pile to the surrounding is dampened. In practice a considerable off centred pile or screen still may result in a dampened noise transmission.

The centre system is capable to accommodate considerable side forces which occur during offshore use.

In an embodiment of the centre system, the second coupling means couples the centring system and the first tubular element (2) such that longitudinal movement of the first tubular element (2) along the central axis is allowed.

In an embodiment of the assembly, the at least two drive means are symmetrically and/or evenly distributed around the central axis. This is even more beneficial for centring the first and second tubular element in a controlled manner.

In an embodiment of the assembly, the at least two drive means are oppositely arranged around the central axis.

In an embodiment of the assembly, the line of action of each drive means, intersects the central longitudinal axis. This is beneficial for the effectiveness of the assembly.

In an embodiment of the assembly, the drive system comprises three drive means.

In an embodiment of the assembly, the centre system comprises a hydraulic system and wherein the drive system is part of the hydraulic system.

In an embodiment of the assembly, a first drive means of the at least two drive means comprises a first hydraulic cylinder and a second drive means of the at least two drive means comprises a second hydraulic cylinder, the first and second hydraulic cylinder being mutually volumetrically coupled for evenly driving said one of the first and second tubular elements for maintaining said one of the first and second tubular elements in its centred position. This is beneficial in connection with control of the drive means. Because of the volumetric coupling the first and second cylinder are evenly driven.

In an embodiment of the assembly, the first and second hydraulic cylinder are mutually hydraulically series coupled for evenly driving said one of the first and second tubular elements for maintaining said one of the first and second tubular elements in its centred position. This is even more beneficial in connection with control of the drive means. Powering one of the first and second hydraulic cylinders, drives the other cylinder as well in an even manner.

In an embodiment, the assembly comprises a first source of pressurized hydraulic fluid for biasing the said one of the first and second tubular elements towards its centred position.

In an embodiment of the assembly, the fist source of pressurized fluid is directly coupled with only one of the first and second hydraulic cylinder. This is beneficial for ease of operation and construction of the assembly.

In an embodiment of the assembly, the second coupling means comprises at least one of the following, a levering means, a rolling means, and a sliding means, for engaging the other tubular element for centring the other tubular element at the central axis. In particular the levering means, do even more facilitate the centre system to centre a tubular element having a tapered section.

In an embodiment, the assembly comprises a plurality of centre systems arranged along the central axis for mutually aligning the first and second elongate tubular element at the central axis.

The invention further relates to a method according to claim 14.

### Description of the drawings

The invention will be further elucidated referring to a preferred embodiment shown in the drawing wherein shown in:
Fig. 1 in a cross sectional side view an assembly of a centre system and a first and second tubular element;
fig. 2 a top view of a centre system of an assembly according to the invention;
fig 3 a schematic view a hydraulic system of an embodiment of the centre system of the assembly according to the invention; and
fig. 4 a side view of a detail of an embodiment of the centre system of the assembly according to the invention.

### Detailed description of embodiments

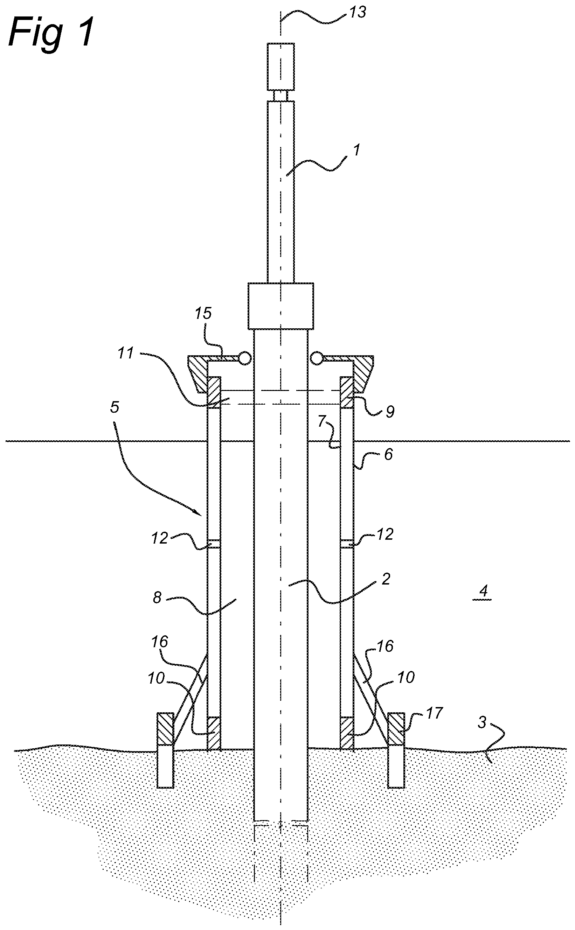

Fig. 1 shows in a cross sectional side view an assembly of a centre system 11, which is schematically depicted, and a first and second tubular element. The figure 1 shows a pile-driving device 1 by means of which a tubular element here a pile element 2 can be driven into the bottom 3 of a body of water 4. A second tubular element, here an elongate tube 5, is provided around the pile element 2. In this case, the elongate tube 5 comprises an outer wall 6 and an inner wall 7. The pile element 2 and the tube 5 are ideally arranged concentrically with respect to one another along a central axis 13, with an intermediate space 8 being present between the pile element 2 and the tube 5.

In the illustrated embodiment, the pile 2 and tube 5 is of a substantially cylindrical design. In other embodiments (not shown), the tube may of course have another shape, provided that an intermediate space is formed between the outer and inner wall which can reduce the transmission of noise or vibrations to the environment.

The tube 5 is preferably made from steel walls. The structure of the tube may be self-supporting, which means that no separate supporting structure has to be provided in order to keep the tube in its vertical position.

Fig. 1 shows that a centre system 11 is provided at the top of the tube 5. Here, the centre system 11 is schematically depicted. In practice several centre systems 11 may be arranged along the length of the pile 2 for centring and aligning the pile 2 with the tube 5. This centre system 11 ensures that the source of sound, being the pile 2 while being hammered down by hammering installation 1, remains centred in the tube 5, which is an optimal position in view of noise dampening. The diameter of the pile 2 can vary along its length, therefore the centre system is adjustable so that this variation can be allowed and in addition any intended narrowing and/or widening of the pile 2 can be accommodated by the centre system. The pile 2 may for example have a tapered section, or sections of different cross section like a telescopic pile.

The dimensions of the centre system vary, depending on the dimensions of the sound source, being the pile 2. The pile may have a characteristic diameter of 4-6 m or more, the diameter of the tube 5 will in practice be 7 m or more, so that the distance between the sound source and the inner side of the tube is sufficiently large to prevent contact noise (that is to say transmission of noise by direct contact between the sound source and the tube).

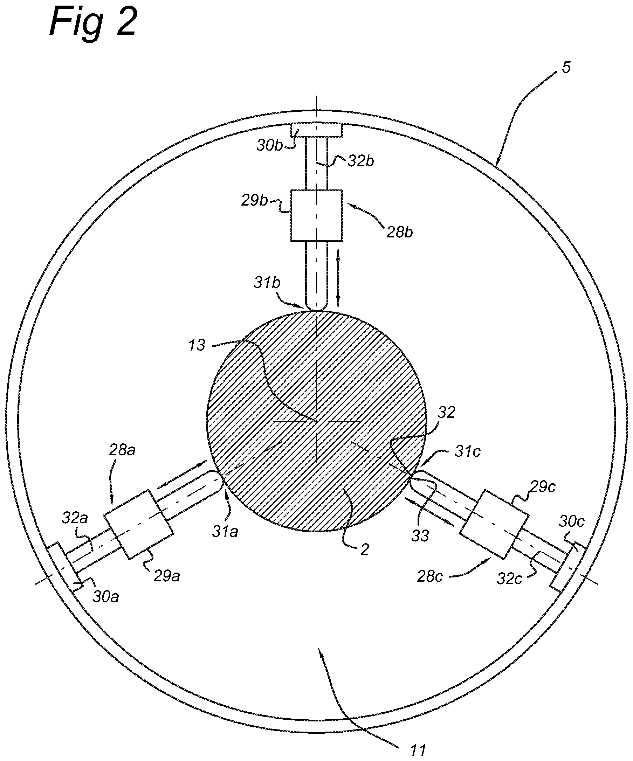

Fig. 2 shows a top view of a centre system 11 of an assembly according to the invention. Here, the centre system 11 is fixedly coupled with tube 5, and engages the pile 2 for centring the pile 2 at the central axis 13. The first coupling means 30a, 30b, 30c fixedly couple the centre system 11 with the tube 5. The second coupling means 31a, 31b, 31c engage the pile 2 for centring the pile at the central axis 13. The pile 2 is able to slide with respect to the second coupling means 31a, 31b, 31c. The drive system has three drive means 28a, 28b, 28c evenly arranged around the central axis 13. Here, each drive means 28a, 28b, 28c has a line of action 32a, 32b, 32c for applying a centring force at a circumference of the pile 2 towards a centred position of the pile at the central axis 13.

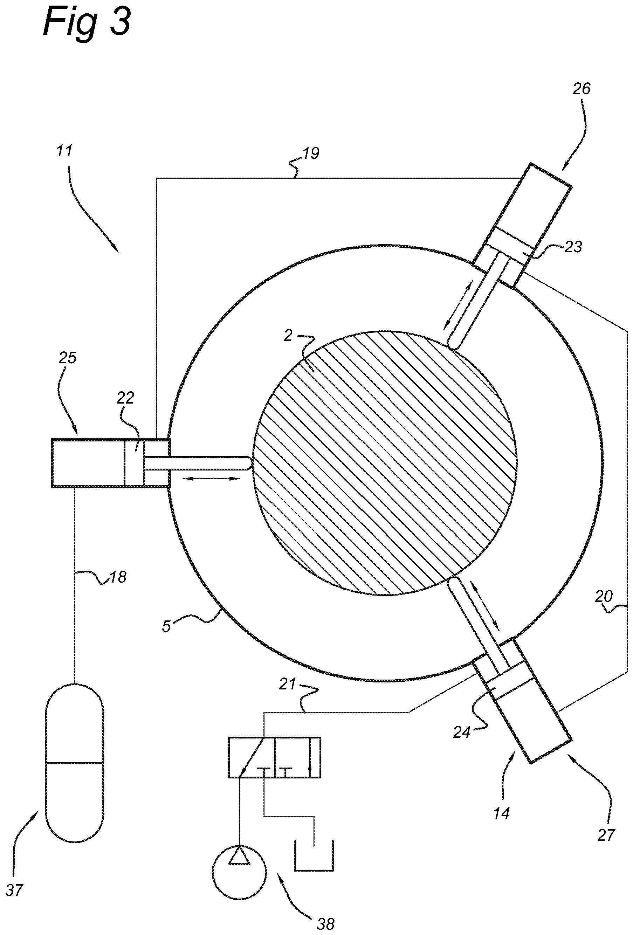

Fig 3 shows a schematic view a hydraulic system 14 of an embodiment of the centre system 11 of an assembly according to the invention. The hydraulic system 14 is divided in number of hydraulic sections 18, 19, 20 and 21, separated by respective cylinder pistons 22, 23, 24. The hydraulic sections, though separated with respect to hydraulic fluid itself, are series coupled with respect to displaced volume of hydraulic fluid. When during operation, the piston 22 of the first hydraulic cylinder is forced to move over a certain stroke, e.g. because of a tapered section of a pile 2, a certain volume of hydraulic fluid is displaced in the second hydraulic section 19. The piston diameter 23 of a subsequent hydraulic cylinder 26 is chosen such that the displaced volume of the second hydraulic section 19 forces the piston 23 of the second hydraulic cylinder to move over a stroke that is equal to that certain stroke of the piston 22 of the first hydraulic cylinder 25. This way, the pile 5 is maintained in its centred position at the central axis 13.

It is conceivable that the hydraulic system 14 comprises two accumulators as a source of pressurized fluid for driving the hydraulic cylinders. Each end of the hydraulic system is coupled with one of the two accumulators. One accumulator 37 is shown, the other accumulator (not shown) is coupled with hydraulic section 21 which section in fig. 3 is coupled with valve unit 38. Providing two accumulators is beneficial since in that case no supply conduits to the centre system are required during driving of the pile while still providing a controlled actuation of the hydraulic cylinders of the centre system 1.

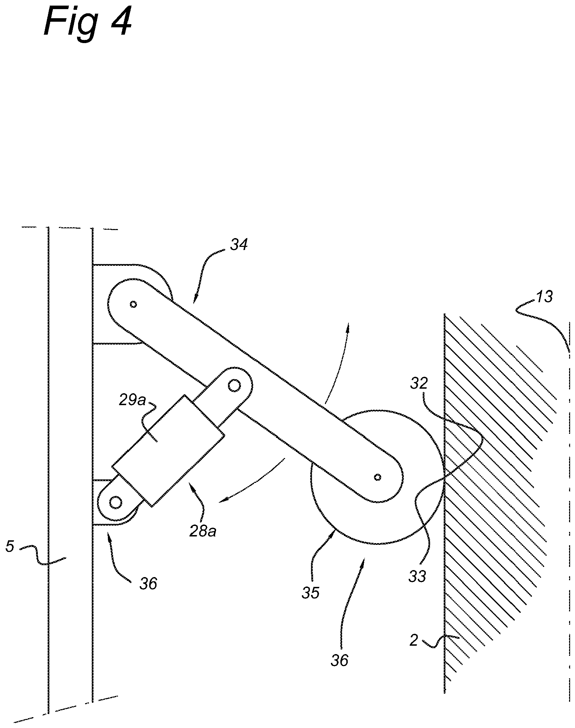

Fig. 4 shows a detail of an embodiment of the centre system of an assembly according to the invention.

A lever arrangement 34 is applied as a first coupling means to fixedly couple the centre system 11 with the tube 5. A contact wheel 35 is applied as a second coupling means to engage the pile 2 for centring the pile at the central axis 13. The pile 2 is able to slide with respect to the wheel 35. The running surface 32 of the wheel 35 engages the outer circumference 33 of the pile 2. Here, a drive means 28a is coupled with the tube 5 and the lever arrangement 34 for applying a centring force at a circumference of the pile 2 towards a centred position of the pile at the central axis 13. The drive means 28a applies the centring force by means of the lever arrangement 34 and the wheel 35. The drive means 28a is hingeably coupled with the pile 2. The drive means 28a is couples with the lever arrangement 34 is a sliding manner.

It will also be obvious after the above description that the drawings are included to illustrate some embodiments of the invention, and not to limit the scope of protection. Starting from this disclosure, many more embodiments will be evident to a skilled person which are within the scope of protection which is defined by the claims.

## Claims

1. Assembly of a first and second elongate tubular element (2, 5), the first and second elongate tubular element (2, 5) being respectively an underwater pile (2) and a noise mitigation screen (5) wherein the underwater pile (2) is accommodated within the noise mitigation screen (5), the assembly also comprising a centre system (11) suitable for centring the first elongate tubular element (2) and the second elongate tubular element (5), and wherein the assembly has a common central longitudinal axis (13) along which axis both the first and second tubular element (2, 5) extend and wherein the centre system (11) comprises;
- a first coupling means (30a, 30 b, 30c) for fixedly coupling the centre system with the second tubular element (5), and
- a second coupling means (31a, 31b, 31c) for engaging the first tubular element (2) for centring the first tubular element (2) at the common central longitudinal axis (13), and
- a drive system having at least two drive means (28a, 28b, 28c) arranged around the common central longitudinal axis (13), each drive means (28a, 28b, 28c) having a line of action (32a, 32b, 32c) for applying a centring force at a circumference of the first tubular element (2) towards a centred position of said first tubular element (2) at the common central longitudinal axis (13), wherein the at least two drive means (28a, 28b, 28c) are mutually coupled for evenly driving said second tubular element for maintaining said second tubular element in its centred position, and wherein the centre system (11) is fixedly coupled with the second tubular element (5), and engages the first tubular element (2) for centring the first tubular element (2) at the common central longitudinal axis (13) such that an intermediate space (8) between the first and second tubular elements (2, 5) is optimal with respect to noise dampening.

2. Assembly according to claim 1, the second coupling means being suitable for coupling the centring system and the first tubular element (2) for allowing longitudinal movement of the first tubular element (2) along the common central longitudinal axis (13).

3. Assembly according to a preceding claim, wherein the at least two drive means are symmetrically and/or evenly distributed around the common central longitudinal axis (13).

4. Assembly according to claim 3, wherein the at least two drive means are oppositely arranged around the common central longitudinal axis (13).

5. Assembly according to a preceding claim, wherein the line of action of each drive means, intersects the common central longitudinal axis (13).

6. Assembly according to a preceding claim, wherein the drive system comprises three drive means.

7. Assembly according to a preceding claim, wherein the centre system comprises a hydraulic system and wherein the drive system is part of the hydraulic system.

8. Assembly according to claim 7, wherein a first drive means of the at least two drive means comprises a first hydraulic cylinder and a second drive means of the at least two drive means comprises a second hydraulic cylinder, the first and second hydraulic cylinder being mutually volumetrically coupled for evenly driving said first tubular element for maintaining said one of the first and second tubular elements in its centred position.

9. Assembly according to claim 8, wherein the first and second hydraulic cylinder are mutually hydraulically series coupled for evenly driving said first tubular element for maintaining said first tubular element in its centred position.

10. Assembly according to claim 7-9, comprising a first source of pressurized hydraulic fluid for biasing the said one of the first and second tubular elements towards its centred position.

11. Assembly according to claim 8-10, wherein the first source of pressurized fluid is directly coupled with only one of the first and second hydraulic cylinder.

12. Assembly according to a preceding claim, wherein the second coupling means comprises at least one of the following, a levering means (34), a rolling means (35) and a sliding means, for engaging the first tubular element (2) for centring the first tubular element at the central axis (13).

13. Assembly according to a preceding claim, comprising a plurality of centre systems arranged along the central axis for mutually aligning the first and second elongate tubular element at the central axis.

14. Method for centring a first elongate tubular element (2) and a second elongate tubular element (5), being respectively an underwater pile (2) and a noise mitigation screen (5) wherein the underwater pile (2) is accommodated within the noise mitigation screen (5), at a common central longitudinal axis (13) along which axis both the first and second element extend, and wherein the method comprises;
- providing a drive system for applying a centring force, having at least two drive means (28a, 28b, 28c) arranged around the central axis,
- applying a centring force at a circumference of the first tubular element towards a centred position of said first tubular element at the central axis,
- evenly driving the at least two drive means (28a, 28b, 28c) for maintaining said first tubular element in its centred position.

## Patentansprüche

1. Anordnung eines ersten und eines zweiten gestreckten, rohrförmigen Elements (2, 5), wobei das erste und das zweite gestreckte, rohrförmige Element (2, 5) jeweils ein Unterwasserpfahl (2) und eine Schallminderungsabsperrwand (5) ist, wobei der Unterwasserpfahl (2) in der Schallminderungsabsperrwand (5) untergebracht ist, die Anordnung außerdem ein Zentriersystem (11) aufweist, das zum Zentrieren des ersten gestreckten, rohrförmigen Elements (2) und des zweiten gestreckten, rohrförmigen Elements (5) geeignet ist, und wobei die Anordnung eine gemeinsame Mittellängsachse (13) aufweist, entlang dieser Achse sich sowohl das erste als auch das zweite rohrförmige Element (2, 5) erstrecken, und wobei das Zentriersystem (11) umfasst:
- eine erste Verbindungseinrichtung (30a, 30b, 30c) zur festen Verbindung des Zentriersystems mit dem zweiten rohrförmigen Element (5), und
- eine zweite Verbindungseinrichtung (31a, 31b, 31c) zum Eingriff des ersten rohrförmigen Elements (2), um das erste rohrförmige Element (2) auf der gemeinsamen Mittellängsachse (13) zu zentrieren, und
- ein Antriebssystem mit mindestens zwei Antriebseinrichtungen (28a, 28b, 28c), die um die gemeinsame Mittellängsachse (13) angeordnet sind, jede Antriebseinrichtung (28a, 28b, 28c) eine Wirkungslinie (32a, 32b, 32c) zum Aufbringen einer Zentrierkraft an einem Umfang des ersten rohrförmigen Elements (2) zu einer zentrierten Position des ersten rohrförmigen Elements (2) hin auf der gemeinsamen Mittellängsachse (13) aufweist, wobei
die mindestens zwei Antriebseinrichtungen (28a, 28b, 28c) wechselweise gekoppelt sind, um das zweite rohrförmige Element gleichmäßig anzutreiben, damit das zweite rohrförmige Element in seiner zentrierten Position gehalten wird,
und wobei das Zentriersystem (11) fest mit dem zweiten rohrförmigen Element (5) verbunden ist und mit dem ersten rohrförmigen Element (2) in Eingriff kommt, um das erste rohrförmige Element (2) auf der gemeinsamen Mittellängsachse (13) zu zentrieren, so dass ein Zwischenraum (8) zwischen dem ersten und dem zweiten rohrförmigen Element (2, 5) bezüglich Schalldämmung optimal ist.

2. Anordnung nach Anspruch 1, wobei die zweite Verbindungseinrichtung zur Verbindung des Zentriersystems und des ersten rohrförmigen Elements (2) geeignet ist, um eine Längsbewegung des ersten rohrförmigen Elements (2) längs der gemeinsamen Mittellängsachse (13) zu ermöglichen.

3. Anordnung nach einem vorhergehenden Anspruch, wobei die mindestens zwei Antriebseinrichtungen symmetrisch und/oder gleichmäßig um die gemeinsame Mittellängsachse (13) verteilt sind.

4. Anordnung nach Anspruch 3, wobei die mindestens zwei Antriebseinrichtungen gegenüber liegend um die gemeinsame Mittellängsachse (13) herum angeordnet sind.

5. Anordnung nach einem vorhergehenden Anspruch, wobei die Wirkungslinie jeder Antriebseinrichtung die gemeinsame Mittellängsachse (13) schneidet.

6. Anordnung nach einem vorhergehenden Anspruch, wobei das Antriebssystem drei Antriebseinrichtungen umfasst.

7. Anordnung nach einem vorhergehenden Anspruch, wobei das Zentriersystem ein Hydrauliksystem enthält und wobei das Antriebssystem Teil des Hydrauliksystems ist.

8. Anordnung nach Anspruch 7, wobei eine erste Antriebseinrichtung der mindestens zwei Antriebseinrichtungen einen ersten Hydraulikzylinder enthält, und eine zweite Antriebseinrichtung der mindestens zwei Antriebseinrichtungen einen zweiten Hydraulikzylinder enthält, wobei der erste und der zweite Hydraulikzylinder zum gleichmäßigen Antrieb des ersten rohrförmigen Elements wechselweise volumetrisch verbunden sind, um das eine des ersten und des zweiten rohrförmigen Elemente in seiner zentrierten Position zu halten.

9. Anordnung nach Anspruch 8, wobei der erste und zweite Hydraulikzylinder wechselweise hydraulisch in Reihe verbunden sind zum gleichmäßigen Antrieb des ersten rohrförmigen Elements, um das erste rohrförmige Element in seiner zentrierten Position zu halten.

10. Anordnung nach Anspruch 7 bis Anspruch 9, umfassend eine erste Quelle von unter Druck stehendem Hydraulikfluid zum Vorspannen des einen des ersten und des zweiten rohrförmigen Elements zu seiner zentrierten Position hin.

11. Anordnung nach Anspruch 8 bis Anspruch 10, wobei die erste Quelle von Druckfluid direkt mit nur einem des ersten und zweiten Hydraulikzylinders verbunden ist.

12. Anordnung nach einem vorhergehenden Anspruch, wobei die zweite Verbindungseinrichtungen mindestens eins von Folgendem umfasst, eine Hebelbetätigungseinrichtung (34), eine Rolleinrichtung (35) und eine Gleiteinrichtung zum Eingriff des ersten rohrförmigen Elements (2), um das erste rohrförmige Element an der Mittelachse (13) zu zentrieren.

13. Anordnung nach einem vorhergehenden Anspruch, umfassend eine Vielzahl von Zentriersystemen, die längs der Mittelachse angeordnet sind zum wechselweisen Ausrichten des ersten und des zweiten gestreckten, rohrförmigen Elements an der Mittelachse.

14. Verfahren zum Zentrieren eines ersten gestreckten, rohrförmigen Elements (2) und eines zweiten gestreckten, rohrförmigen Elements (5), die jeweils ein Unterwasserpfahl (2) und eine Schallminderungsabsperrwand (5) sind, wobei der Unterwasserpfahl (2) innerhalb der Schallminderungsabsperrwand (5) untergebracht ist, an einer gemeinsamen Mittellängsachse (13), an der entlang sowohl das erste als auch das zweite Element sich erstrecken, und wobei das Verfahren umfasst:
- Bereitstellen eines Antriebssystems zum Aufbringen einer Zentrierkraft, das mindestens zwei Antriebseinrichtungen (28a, 28b, 28c) enthält, die um die Mittelachse herum angeordnet sind,
- Aufbringen einer Zentrierkraft an einem Umfang des ersten rohrförmigen Elements zu einer zentrierten Position des ersten rohrförmigen Elements an der Mittelachse hin,
- gleichmäßiges Antreiben der mindestens zwei Antriebseinrichtungen (28a, 28b, 28c) zum Halten des ersten rohrförmigen Elements in seiner zentrierten Position.

## Revendications

1. Ensemble constitué d'un premier et d'un second élément tubulaire allongé (2, 5), les premier et second éléments tubulaires allongés (2, 5) étant respectivement un pieu immergé (2) et un écran d'atténuation de bruit (5) dans lequel le pieu immergé (2) est logé à l'intérieur de l'écran d'atténuation de bruit (5), l'ensemble comprenant également un système de centrage (11) adapté pour centrer le premier élément tubulaire allongé (2) et le second élément tubulaire allongé (5), et dans lequel l'ensemble a un axe longitudinal central commun (13), axe le long duquel s'étendent à la fois les premier et second éléments tubulaires (2, 5), et dans lequel le système de centrage (11) comprend ;
- un premier moyen de couplage (30a, 30b, 30c) pour coupler de manière fixe le système de centrage avec le second élément tubulaire (5), et
- un second moyen de couplage (31a, 31b, 31c) pour une mise en prise du premier élément tubulaire (2) pour centrer le premier élément tubulaire (2) au niveau de l'axe longitudinal central commun (13), et
- un système d'entraînement ayant au moins deux moyens d'entraînement (28a, 28b, 28c) agencés autour de l'axe longitudinal central commun (13), chaque moyen d'entraînement (28a, 28b, 28c) ayant une ligne d'action (32a, 32b, 32c) pour appliquer une force de centrage au niveau d'une circonférence du premier élément tubulaire (2) vers une position centrée dudit premier élément tubulaire (2) au niveau de l'axe longitudinal central commun (13), dans lequel
les au moins deux moyens d'entraînement (28a, 28b, 28c) sont couplés mutuellement pour entraîner uniformément ledit second élément tubulaire pour maintenir ledit second élément tubulaire dans sa position centrée,
et dans lequel le système de centrage (11) est couplé de manière fixe avec le second élément tubulaire (5), et vient en prise avec le premier élément tubulaire (2) pour centrer le premier élément tubulaire (2) au niveau de l'axe longitudinal central commun (13) de telle sorte qu'un espace intermédiaire (8) entre les premier et second éléments tubulaires (2, 5) est optimum par rapport à l'atténuation de bruit.

2. Ensemble selon la revendication 1, les seconds moyens de couplage étant adaptés pour coupler le système de centrage et le premier élément tubulaire (2) pour permettre un déplacement longitudinal du premier élément tubulaire (2) le long de l'axe longitudinal central commun (13).

3. Ensemble selon une revendication précédente, dans lequel les au moins deux moyens d'entraînement sont répartis symétriquement et/ou uniformément autour de l'axe longitudinal central commun (13).

4. Ensemble selon la revendication 3, dans lequel les au moins deux moyens d'entraînement sont agencés en vis-à-vis autour de l'axe longitudinal central commun (13).

5. Ensemble selon une revendication précédente, dans lequel la ligne d'action de chaque moyen d'entraînement recoupe l'axe longitudinal central commun (13).

6. Ensemble selon une revendication précédente, dans lequel le système d'entraînement comprend trois moyens d'entraînement.

7. Ensemble selon une revendication précédente, dans lequel le système central comprend un système hydraulique et dans lequel le système d'entraînement fait partie du système hydraulique.

8. Ensemble selon la revendication 7, dans lequel un premier moyen d'entraînement des au moins deux moyens d'entraînement comprend un premier vérin hydraulique et un deuxième moyen d'entraînement des au moins deux moyens d'entraînement comprend un second vérin hydraulique, les premier et second vérins hydrauliques étant couplés mutuellement de manière volumétrique pour entraîner uniformément ledit premier élément tubulaire pour maintenir ledit un des premier et second éléments tubulaires dans sa position centrée.

9. Ensemble selon la revendication 8, dans lequel les premier et second vérins hydrauliques sont couplés en série hydrauliquement mutuellement pour entraîner uniformément ledit premier élément tubulaire pour maintenir ledit premier élément tubulaire dans sa position centrée.

10. Ensemble selon les revendications 7 à 9, comprenant une première source de fluide hydraulique sous pression pour solliciter ledit un des premier et second éléments tubulaires vers sa position centrée.

11. Ensemble selon les revendications 8 à 10, dans lequel la première source de fluide sous pression est couplée directement à un seul des premier et second cylindres hydrauliques.

12. Ensemble selon une revendication précédente, dans lequel le second moyen de couplage comprend au moins un parmi un moyen à effet de levier (34), un moyen de roulement (35) et un moyen de coulissement, pour venir en prise avec le premier élément tubulaire (2) pour centrer le premier élément tubulaire sur l'axe central (13).

13. Ensemble selon une revendication précédente, comprenant une pluralité de systèmes de centrage disposés le long de l'axe central pour aligner mutuellement les premier et second éléments tubulaires allongés au niveau de l'axe central.

14. Procédé de centrage d'un premier élément tubulaire allongé (2) et d'un second élément tubulaire allongé (5), étant respectivement un pieu immergé (2) et un écran d'atténuation de bruit (5), dans lequel le pieu immergé (2) est logé à l'intérieur de l'écran d'atténuation de bruit (5), au niveau d'un axe longitudinal central commun (13) le long duquel s'étendent à la fois les premier et second éléments, et dans lequel le procédé comprend les étapes consistant à ;
- fournir un système d'entraînement pour appliquer une force de centrage, ayant au moins deux moyens d'entraînement (28a, 28b, 28c) disposés autour de l'axe central,
- appliquer une force de centrage au niveau d'une circonférence du premier élément tubulaire vers une position centrée dudit premier élément tubulaire au niveau de l'axe central,
- entraîner uniformément les au moins deux moyens d'entraînement (28a, 28b, 28c) pour maintenir ledit premier élément tubulaire dans sa position centrée.
